(19) Europäisches Patentamt

European Patent Office

Office européen des brevets

(11) Publication number: **0 140 496**
**B1**

(12) **EUROPEAN PATENT SPECIFICATION**

(45) Date of publication of patent specification: **04.03.87**

(21) Application number: **84305457.8**

(22) Date of filing: **10.08.84**

(51) Int. Cl.⁴: **B 29 D 9/00, B 32 B 7/00, B 32 B 33/00, B 05 D 7/00, B 29 C 37/00**

(54) Method for manufacturing decorative moulding.

(30) Priority: **23.08.83 JP 153699/83**

(43) Date of publication of application:
**08.05.85 Bulletin 85/19**

(45) Publication of the grant of the patent:
**04.03.87 Bulletin 87/10**

(84) Designated Contracting States:
**BE DE FR GB IT**

(56) References cited:
**FR-A-2 007 631**
**GB-A-1 392 212**

(73) Proprietor: **INOUE MTP KABUSHIKI KAISHA**
**13-4, 2-chome, Meieki-minami Nakamura-ku**
**Nagoya-shi Aichi-ken (JP)**

(72) Inventor: **Takeuchi, Shin**
**36-4, Aza-Aburada Oaza-Miyoshi Miyoshi-cho**
**Nishikamo-gun Aichi-ken (JP)**

(74) Representative: **Silverman, Warren et al**
**HASELTINE LAKE & CO. Hazlitt House**
**28 Southampton Buildings Chancery Lane**
**London WC2A 1AT (GB)**

Courier Press, Leamington Spa, England.

## Description

This invention relates to a method for manufacturing a decorative moulding, more particularly a plastics-based decorative moulding.

Plastics decorative mouldings are conventionally used for decorating edges of desks or tables or other items of furniture or for decorating, protecting and/or covering projections provided on outer and inner surfaces of automobile bodies.

Conventional mouldings produced in different lengths and having the same cross sectional shape find use for a variety of purposes. Such mouldings are usually manufactured by a plastics extrusion moulding process in which elongated products having a uniform cross section can be continuously moulded. The moulded products obtained by the extrusion moulding process are then cut to predetermined lengths, for the particular intended uses of the decorative mouldings. The cut ends of the decorative mouldings must be, however, finished with special instruments, or must be subjected to special surface treatments.

In order to eliminate the need for such a special finishing operation or surface treatment, it has been proposed to make a decorative moulding from a plastics film to which metal, such as aluminium foil or vapourised aluminium, is applied. A highly homogenous liquid plastics composition is fed onto the plastic film, so that the liquid plastics composition forms itself into a convex surface layer owing to the interfacial force. The convex body of plastics material is then cured, so that a plastics decorative moulding having a convex profile can be obtained. In this way, the above mentioned finishing operation or special surface treatments can be dispensed with, since the ends of the products, i.e. the decorative mouldings obtained have round edges owing to the interfacial tension of the liquid plastics composition.

However, this procedure raises another problem in that, when the liquid plastics composition is cured, the moulding is entirely warped towards the side of the liquid plastics film, due to the mould shrinkage of the liquid plastics. In particular, an elongated product, such as a decorative moulding undergoes a large shrinkage in the longitudinal direction, in proportion to the length, resulting in a large warping at the opposite ends thereof. It goes without saying that warping also occurs in the width direction of the moulding, but the warping here is negligibly small when the width is small, for example of the order of a couple of centimetres.

However the surface of an object, such as a table or an automobile to which the decorative moulding is to be attached is usually flat, or slightly convex. This flat or convex surface makes it impossible or difficult to secure firmly thereto the decorative moulding which warps toward the outer side of the plastic film, by means of an adhesive or welding process. Even if the decorative moulding can be adhered to the surface of the object, the decorative moulding tends to peel off from the surface, of the object, from the opposite ends of the moulding, with the passage of time.

It is an object of the present invention, therefore, to provide a method for manufacturing a decorative moulding which can eliminate the above mentioned problem of warping in lengths of decorative mouldings produced by the aforesaid procedure.

According to the present invention, there is provided a method of manufacturing a decorative moulding having an outer surface with a rounded peripheral edge, which comprises providing a decorative base plate whose length and width correspond to the length and width of the moulding and which comprises an outer decorative layer and a mounting surface made of a plastics material layer which shrinks when heated, pouring a curable liquid plastics material onto the outer surface of the decorative layer of the base plate to coat it and then subjecting the liquid plastics material to curing conditions to cure the same and heating the plastics layer of the base plate so that a predetermined amount of shrinkage of the plastics layer takes place counteracting mould shrinkage of the liquid plastics material.

For a better understanding of the invention and to show how the same can be carried into effect reference will be made by way of example only to the accompanying drawings, wherein:

Figure 1 is a schematic view of a decorative film on to which liquid resin is poured, according to the prior art when carrying out a process for producing a decorative strip,

Figure 2 is a schematic view of the decorative moulding produced according to such a prior art process and which warps at its opposite ends;

Figure 3 is a longitudinal section through the base plate of a decorative moulding to be used in the process according to the present invention;

Figure 4 is a schematic view of a stage in the manufacturing of a decorative moulding according to the present invention; and

Figure 5 is a longitudinal section through a decorative moulding obtained by the method of the present invention.

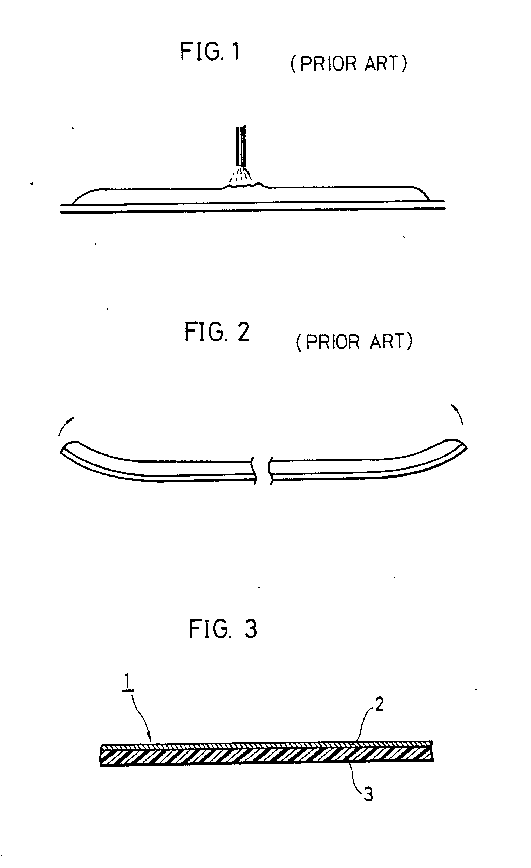

Referring to Figures 1 and 2 of the accompanying drawings the character of the prior art working procedure and a product obtained therby are self-evident from what is shown.

Referring next to Figure 3 there is shown in longitudinal section a predetermined shape of base plate 1 for a decorative moulding, which plate has an outer decorative layer 2 and a mounting surface made of a plastics layer 3 which shrinks when heated. The decorative layer 2 can be made of aluminium foil or other metal foil such as stainless steel, foil, or be a plastics decorative material having metallic lustre, such as a polyester film on which a metal is evaporated. Preferably, the decorative layer 2 is made of a material which scarcely shrinks at a temperature below 100 C.

The plastics material of which the decorative layer 2 is made is preferably treated in advance in such a way that it is drawn at a high temperature above the softening point but below the melting point, of the plastics material, and is then heat-set so that almost no shrinkage occurs.

It is also possible at this stage to have desired patterns or indicia such as letters or numerals applied, onto the decorative layer 2, by a printing process or hot stamping process, which is known *per se.*

The heat shrinkable plastics layer 3 can be made of a soft or semi-rigid plastics material, such as soft polyvinyl chloride resin or ionomer resin. The plastics layer 3 is, preferably, subject to a large tensile force when it is moulded, so that a predetermined excess mould distortion is given thereto. Alternatively, the plastics layer 3 can be slightly drawn in advance, so that a desired amount of shrinkage thereof occurs when it is heated.

The base plate 1 which comprises the outer decorative layer 2 and the heat shrinkable plastics layer 3 which is rigidly superimposed on the decorative layer 2 to provide a mounting surface of the decorative moulding is preferably produced from a preformed sheet material for example by shearing or stamping.

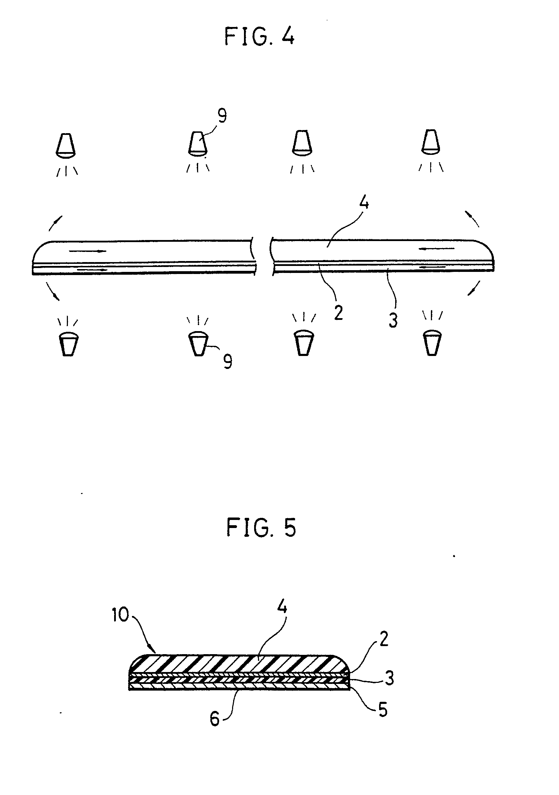

When the decorative base plate 1 is available in the required dimensions, it is placed on a flat plate (not shown). After that, a body of liquid plastics material 4, preferably a transparent liquid plastics material such as polyurethane resin, acrylic resin, or epoxy resin, which are all curable by polymerization, is poured onto the base plate 1, so that the latter is coated with liquid plastics material 4. It should be noted that the liquid plastics material has a high viscosity and accordingly the plastics material 4 fed onto the base sheet 1 presents a convex profile on the base sheet owing to the interfacial tension thereof. This results in the formation of round peripheral edges of the plastic material (see Figure 4).

The liquid plastics material 4 is then heated at 50° C to 80° C by an infrared heater 9 as shown in Figure 4, or in a hot air bath to accelerate the polymerization reaction and to cure the liquid plastics material 4. When the liquid plastics material is heated, shrinkage thereof takes place. Owing to shrinkage, the base plate 1 would normally tend to be bent towards the outer surface, i.e. the cured plastics material 4.

However, when carrying out the method of the present invention, since the base plate 1 includes the heat shrinkable plastics layer 3 which forms the mounting surface for the decorative moulding and which is also heated together with plastics material 4 when the latter is heated and cured, the heat shrinkable plastics layer 3 undergoes heat shrinkage simultaneously with the shrinkage of the liquid plastics material 4. The heat shrinkage of the plastics layer 3 counteracts the mould shrinkage of the liquid plastics material 4, so that no warping of the base plate 1 overall occurs. The stressing directions in the components of the decorative body being produced are shown in Figure 4 by arrows.

The thickness and the coefficient of heat shrinkage of the heat shrinkable plastics layer 3 which provides the mounting surface of the base plate 1 can be determined in accordance with the constitution of the liquid plastics material 4, more particularly, in accordance with the coefficient of mould shrinkage of liquid plastics material 4.

Thus, it is possible to ensure that the mounting surface of the heat shrinkable plastics layer 3 is flat.

Alternatively, it is possible to provide a concave mounting surface for the heat shrinkable plastics layer 3 by properly selecting the thickness or coefficient of heat shrinkage of the liquid plastics material, when the surface of the object to which the decorative moulding is adhered is convex. Namely, when carrying out the method of the present invention, the mounting surface, i.e. the bottom surface of the plastics layer 3 can be flat or of any other shape, depending on the shape of the object to which the decorative moulding is to be attached.

Furthermore, if the liquid plastics material 4 is cured at ambient temperature within a short period of time with the help of catalytic agent or the like, the heat shrinkable plastic layer 3 can be heated to undergo heat shrinking, after the curing of the liquid plastics is completed, so that the plastics layer 3 which has become concave and the liquid plastics material 4 can together be returned to the original flat state, or even can be deformed to be convex.

Finally, in Figure 5, the numeral 5 designates an adhesive layer for securing the decorative moulding 10 onto the surface of an object to which the decorative moulding is to be mounted. The numeral 6 in Figure 5 designates a protective paper for protecting the adhering surface of the adhesive layer 5. The protective paper can be easily removed, when the decorative moulding is to be adhered to the object.

**Claims**

1. A method of manufacturing a decorative moulding having an outer surface with a rounded peripheral edge which comprises providing a decorative base plate (1) whose length and width correspond to the length and width of the moulding and which comprises an outer decorative layer (2) and a mounting surface made of a plastics material layer (3) which shrinks when heated, pouring a curable liquid plastics material (4) onto the outer surface of the decorative layer (2) of the base plate (1) to coat it and then subjecting the liquid plastics material (4) to curing conditions to cure the same and heating the plastics layer (3) of the base plate (1) so that a predetermined amount of shrinkage of the plastics layer (3) takes place counteracting shrinkage of the liquid plastics material (4).

2. A method according to claim 1, wherin said decorative base plate (1) is a strip taken from a sheet material.

3. A method as claimed in claim 2, wherein said decorative base plate (1) is punched or sheared from a sheet material.

4. A method according claim 1 or 2, wherein said heat shrinkable plastic layer (3) comprises a soft or semi-rigid plastics material.

5. A method as claimed in claim 4 wherein said plastics material (3) is polyvinyl chloride resin or ionomer resin.

6. A method according any preceding claim, wherein said heat shrinkable plastics layer (3) is pre-stretched to impart a shrinkage on moulding to the same.

7. A method according to any preceding claim, wherein the curable liquid plastics material (4) is thermo-setting and transparent.

8. A method as claimed in any preceding claims, wherein the liquid plastics material (4) is heat curable and heating thereof for curing achieves said shrinkage of both the liquid plastics material (4) and the plastics layer (3) of the base plate.

9. A method according to any preceding claim, wherein the plastics layer (3) of the base plate (1) is heated to cause heat shrinkage thereof so that the mounting surface of the base plate is flat.

10. A method according to any one of the claims 1 to 8, wherein the plastics layer (3) of the base plate (1) is heated to cause heat shrinkage thereof, so that the mounting suface of the base plate (1) is concave in such a way that the mounting surface is curved to project toward the outer surface of the base plate.

## Patentansprüche

1. Verfahren zur Herstellung eines dekorativen Formstücks, dessen Außenfläche eine gerundete Umfangskante aufweist,
bei dem man eine in Länge und Breite mit dem Formstück übereinstimmende dekorative Grundplatte (1) mit einer äußeren dekorativen Schicht (2) und einer Montagefläche aus einer wärmeschrumpfenden Kunststoffschicht (3) schafft,
bei dem man zur Beschichtung der Außenfläche der dekorativen Schicht (2) der Grundplatte einen härtbaren flüssigen Kunststoff (4) auf die Außenfläche der dekorativen Schicht (2) der Grundplatte (1) gießt, und
und bei dem man dann den flüssigen Kunststoff (4) Aushärtbedingungen aussetzt, um diesen zu härten, und
bei dem man die Kunststoffschicht (3) der Grundplatte (1) so erhitzt, daß ein vorbestimmtes Schrumpfungsausmaß der Kunststoffschicht (3) eintritt, welches der Schrumpfung des flüssigen Kunststoffs (4) entgegenwirkt.

2. Verfahren nach Anspruch 1, bei dem die dekorative Grundplatte (1) ein Streifen aus einer Materialbahn ist.

3. Verfahren nach Anspruch 2, bei dem die dekorative Grundplatte (1) aus einer Materialbahn gestanzt oder geschnitten ist.

4. Verfahren nach Anspruch 1 oder 2, bei dem die wärmeschrumpfbare Kunststoffschicht (3) einen weichen oder halbfesten Kunststoff enthält.

5. Verfahren nach Anspruch 4, bei dem der Kunststoff (3) Polyvinylchloridharz oder Ionomerharz ist.

6. Verfahren nach einem der vorhergehenden Ansprüche, bei dem die wärmeschrumpfbare Kunststoffschicht (3) vor-gestreckt ist, damit diese bei der Formung schrumpft.

7. Verfahren nach einem der vorhergehenden Ansprüche, bei dem der härtbare flüssige Kunststoff (4) wärmehärtbar und transparent ist.

8. Verfahren nach einem der vorhergehenden Ansprüche, bei dem der flüssige Kunststoff (4) wärmehärtbar ist und ein Erhitzen des Kunststoffs zum Aushärten desselben das Schrumpfen des flüssigen Kunststoffs (4) und der Kunststoffschicht (3) der Grundplatte bewirkt.

9. Verfahren nach einem der vorhergehenden Ansprüche, bei dem die Kunststoffschicht (3) der Grundplatte (1) erhitzt wird, um die Kunststoffschicht durch Hitze schrumpfen zu lassen, so daß die Montagefläche der Grundplatte eben ist.

10. Verfahren nach einem der Ansprüche 1 bis 8, bei dem die Kunststoffschicht (3) der Grundplatte (1) erhitzt wird, damit sie durch Hitze schrumpft, so daß die Montagefläche der Grundplatte (1) derart konkav ist, daß sie gewölbt in Richtung der Außenfläche der Grundplatte auslädt.

## Revendications

1. Un procédé de fabrication d'une moulure décorative ayant une surface extérieure avec un bord périphérique arrondi, qui comprend les opérations consistant à établir une plaque de base décorative (1) dont la longueur et la largeur correspondent à la longueur et à la largeur de la moulure, et qui comprend une couche décorative extérieure (2) et une surface de montage constituée par une couche de matière plastique (3) qui se rétracte lorsqu'elle est chauffée, à verser une matière plastique liquide durcissable (4) sur la surface extérieure de la couche décorative (2) de la plaque de base (1), pour la revêtir, et à soumettre ensuite la matière plastique liquide (4) à des conditions de durcissement, pour la durcir, et à chauffer la couche de matière plastique (3) de la plaque de base (1), de façon qu'il se produise une rétraction de valeur prédéterminée de la couche de matière plastique (3), qui contrebalance la rétraction de la matière plastique liquide (4).

2. Un procédé selon la revendication 1, dans lequel la plaque de base décorative (1) est une bande obtenue à partir d'une feuille de matière.

3. Un procédé selon la revendication 2, dans lequel la plaque de base décorative (1) est poinçonnée ou cisaillée à partir d'une feuille de matière.

4. Un procédé selon la revendication 1 ou 2, dans lequel la couche de matière plastique rétractable à la chaleur (3) consiste en une matière plastique souple ou semi-rigide.

5. Un procédé selon la revendication 4, dans lequel la matière plastique (3) est une résine de poly-(chlorure de vinyle) ou une résine ionomère.

6. Un procédé selon l'une quelconque des revendications précédentes, dans lequel la couche de matière plastique rétractable à la chaleur (3) est pré-étirée pour qu'elle se rétracte, au moment de son moulage.

7. Un procédé selon l'une quelconque des revendications précédentes, dans lequel la matière plastique liquide durcissable (4) est thermodurcissable et transparente.

8. Un procédé selon l'une quelconque des revendications précédentes, dans lequel la matière plastique liquide (4) est durcissable à la chaleur et son chauffage, en vue de la durcir, produit à la fois la rétraction de la matière plastique liquide (4) et de la couche de matière plastique (3) de la plaque de base.

9. Un procédé selon l'une quelconque des revendications précédentes, dans lequel la couche de matière plastique (3) de la plaque de base (1) est chauffée pour provoquer sa rétraction à la chaleur, de façon que la surface de montage de la plaque de base soit plane.

10. Un procédé selon l'une quelconque des revendications 1 à 8, dans lequel la couche de matière plastique (3) de la plaque de base (1) est chauffée pour produire sa rétraction à la chaleur, de façon que la surface de montage de la plaque de base (1) soit concave, d'une manière telle que la surface de montage soit courbée en direction de la surface extérieure de la plaque de base.

FIG. 1 (PRIOR ART)

FIG. 2 (PRIOR ART)

FIG. 3

1

2

3

## FIG. 4

## FIG. 5